# EUROPEAN PATENT SPECIFICATION

(11) **EP 2 717 682 B1**
(45) Date of publication and mention of the grant of the patent: **04.09.2019**
(21) Application number: 12796683.6
(22) Date of filing: 08.06.2012
(51) Int. Cl.: A01N 25/10, A01N 25/04, A01N 43/70, A01N 47/04, A01N 47/14, A01N 47/30, A01P 13/00, A01P 3/00

(54) **COMPOSITION FOR ENHANCING THE PHYSICAL STABILITY OF AGRICULTURAL OIL-BASED SUSPENSION FORMULATIONS**
ZUSAMMENSETZUNG ZUR ERHÖHUNG DER PHYSIKALISCHEN STABILITÄT VON LANDWIRTSCHAFTLICHEN ÖLBASIERTEN SUSPENSIONSFORMULIERUNGEN
COMPOSITION D'AMÉLIORATION DE STABILITÉ PHYSIQUE DE FORMULATIONS EN il À BASE D'HUILE AGRICOLE

(30) Priority: 10.06.2011 AU 2011902298
(43) Date of publication of application: 16.04.2014
(73) Proprietor: Huntsman Corporation Australia Pty Limited, Brooklyn, VIC 3012 (AU)
(72) Inventor: HOLLIDAY, Andrew, David, Seddon, Victoria 3011 (AU); SAYLIK, Dilek, Meadow Heights, Victoria 3048 (AU); BROWN, Rowan, Flemington, Victoria 3031 (AU); VAN DER SANDE, Karen, 3078 Everberg (BE); KIRBY, Andrew, F., deceased (AU); BOHUN, Robert, E., Doncaster East, Victoria 3109 (AU)
(74) Representative: Van den Broeck, Kristel Alice
(86) International application number: PCT/AU2012/000661
(87) International publication number: WO 2012/167321

(56) References cited:
- WO-A1-01/93679
- WO-A1-2008/045451
- WO-A1-2008/045451
- WO-A1-2011/112768
- WO-A2-2007/124409
- CN-A- 101 836 643
- CN-A- 101 836 644
- CN-A- 101 849 549
- JP-A- 6 065 064
- KR-B1- 100 799 262
- US-A- 3 310 909
- US-A- 3 310 909
- US-B1- 6 667 354
- US-B1- 6 667 354

## Description

### Field of the Invention

This invention relates to the stabilisation of oil-based suspension formulations of agriculturally active finely divided solids. More particularly, the invention relates to oil-based suspension formulations comprising an agriculturally active solid having improved stability.

### Background of the Invention

Formulations comprising an agriculturally active solid suspended in an oil, as the primary component of the continuous phase, have been found advantageous in the treatment of agricultural substrates. Examples of such formulations have been designated by CropLife International as OD ("oil dispersion") and OF ("oil-miscible flowable concentrate") formulations.

Such formulations provide certain advantages to the end user. They allow the formulation of active ingredients in solid suspended form, which ingredients cannot be formulated in water because of hydrolytic instability. Also, such formulations allow oil-based adjuvants to be built-in to the formulation to enhance efficacy. Further, in many cases active ingredients have a solubility limit on the amount that can be loaded into a formulation, such as an emulsifiable concentrate formulation, and so suspension in an oil-based system can possibly lead to higher active ingredient strength formulations than would otherwise be possible.

A major limitation on an oil-based agricultural formulation, such as an OD and OF formulation, is the need to physically stabilize the formulation for potentially long periods of storage, so that it can be in a consistently useable form for later end use. Typically, an OD or OF formulation can exhibit sedimentation of the active ingredient particles over time into a hard-packed non-redispersible layer, or settling of the particles into the lower layers of the liquid column leading to the appearance of phase separation. This is what is commonly termed "syneresis". Depending on the density of the active ingredient and that of the oil phase used, it is also possible to find the active ingredient particles migrating to the top layers of the liquid column. This is often described as "reverse" or "top" syneresis. Such physical instability can occur regardless of the presence of an oil-based surfactant dispersant, which is designed to prevent flocculation of the dispersed particles.

In order for a stabilizer to be useful in an oil-based agricultural suspension, it must provide long term physical stability across a wide temperature range, normally 0° C to 54° C, while still maintaining a viscosity low enough to be practical for production of the formulation and its later end use. A typical viscosity required would be less than 2,000 centipoise ("cP") and preferably, less than 1200cP.

Various methods of stabilization of oil-based formulations are known. Typical stabilizers currently used for oil-based formulations include organically modified hectorite clay, such as the Bentone® range available from Elementis Specialties. In many of the systems that have been tested, the present inventors have found that these stabilizers do not appear to always impart stability across the desired temperature range on accelerated storage at an acceptable viscosity. Further, the thickeners used in some cases appear to inhibit some common non-aqueous dispersants used.

Hydrophobically-modified silicas are also currently used in the art. However, such stabilizers are limited in that the degree of hydrophobicity required cannot always be adequately tuned to that of the oil used. Further, such stabilizers often require the use of a small amount of hydrophilic agent, such as water, to help form a thickening structure in the oil phase. The use of water with silica in many cases negates the purpose of the formulation being anhydrous to avoid chemical degradation of the active ingredient. In many cases, the amount of silica stabilizer required to prevent undesirable sedimentation also leads to a formulation that is highly viscous and impractical to use.

Further, difficulty has been experienced in stabilizing certain active ingredients at their most desirable concentrations. Accordingly, there is a need for improved stabilizers for oil-based agricultural suspension formulations.

The use of synthetic unsaturated rubber-type copolymers, such as styrene-butadiene copolymers and styrene-polyethylene/polypropylene, as thickeners or rheology modifiers for adhesives and coatings is well known. However, to the best of the Applicant's knowledge, such polymers have not previously found practical use in agricultural oil-based suspension formulations. This is possibly because a satisfactory result has not been obtained, when such polymers have been added to oil-based suspensions in a conventional manner, such as by solid addition under high shear after the active ingredient has been dispersed and milled.

U.S. Patent 3,310,909 relates to the use of an oil-extended rubber latex for the treatment of the oil surface with particular reference to combating erosion and improving the soil texture.

WO 01/93679 A1 relates to agrochemical suspension concentrates, particularly in aqueous or liquid oil-based medium, comprising soling particles including one or more agrochemical active components, and a dispersing agents including a water-soluble or dispersible styrene(meth)acrylic acid copolymer.

US 6,667,354 B1 relates to stable suspensions of solid particulates provided through the addition of such solid particulates to a suspension medium which is comprised of a liquid carrier, a liquid carrier soluble resin, an organophilic clay, and an activator.

WO 2008/045451 A1 relates to compositions of at least one block copolymer, wherein the block copolymer has at least one styrene block and at least one unsaturated rubber segment, and of a natural oil.

The present invention seeks to provide an improved stabilised oil-based agricultural suspension formulation and a method for producing the same. More particularly, the present invention seeks to minimize or ameliorate disadvantages and problems found in the prior art.

### Summary of the Invention

It has now been found, unexpectedly, that an unsaturated rubber-type copolymer based on monomers comprising, but not limited to, styrene and butadiene; styrene, ethylene and propylene; and styrene and isoprene, when formulated into a pre-mix composition according to the methods described herein, can afford greatly improved physical stability for an oil-based agricultural formulation, such as an OD or OF formulation.

According to one aspect of the present invention, there is provided an agricultural oil-based suspension formulation comprising: an active ingredient suspended in finely divided form in an oil; and a pre-mix composition comprising an unsaturated rubber-type copolymer comprising at least styrene as a residue in oil and another olefin molecule selected from one or more of butadiene, ethylene, propylene, isoprene and butylenes, the composition further comprising a surfactant dispersant suitable for dispersing hydrophobic solid media in an oil, wherein the surfactant dispersant comprises at least one polyalkylene glycol-fatty acid condensate. More preferably, the copolymer is a styrene-containing polymer selected from a styrene-butadiene copolymer, styrene-polyethylene/polypropylene or styrene-isoprene copolymer. Such copolymers may be in random, alternating or block form, or mixtures thereof.

Additional monomers may be included at levels which do not substantially change the overall form of the copolymer in oil solution or dispersion. As mentioned hereinabove, the unsaturated rubber-type copolymer further comprises another olefin molecule selected from butadiene, ethylene, propylene, isoprene or butylene, or mixtures thereof. Such monomers may include alpha-olefins, and vinyl olefins. Examples of such polymers include the KRATON® polymer range available from Kraton Polymers. Most preferred are the KRATON® G series polymers, such as KRATON® G-1701 polymer.

The active ingredient suitable for inclusion in an OD formulation preferably comprises at least one fungicide, insecticide, herbicide, plant growth regulator, miticide, nematocide, molluscicide, algicide, or other pesticide, or mixtures thereof. More particularly, the active ingredient is selected from, but not limited to, a fungicide, such as an alkylene bis(dithiocarbamate), such as Mancozeb (*i.e.* ethylenebisdithiocarbamate complex with Mg and Zn); Zineb (*i.e.* zinc(ethylenebis dithiocarbamate)polymer or Ziram (*i.e.* zinc bis(dimethyl-dithiocarbamate); Fosetyl-aluminium (*i.e.* aluminium tris-O-ethylphosphonate); Tebuconazole (*i.e.* (RS)-1-(4-chlorophenyl)-4,4-dimethyl-3-(1H-1,2,4-triazo-1-ylmethyl)-pentan-3-ol); copper hydroxide; and copper oxychloride; a phthalimide, such as Captan (*i.e.* N-(trichloromethylthio)-cyclohex-4-ene-1,2-dicarboximide); a herbicide, such as a sulphonyl urea, for example, Nicosulfuron (*i.e.* 2-[(4,6-dimethoxypyrimidin-2-ylcarbamoyl)sulfamoyl]-*N,N*-dimethylnicotinamide); and Azimsulfuron (*i.e.* 1-(4,6-dimethoxypyrimidin-2-yl)-3-[1-methyl-4-(2-methyl-2*H*-tetrazol-5-yl)pyrazol-5-yl sulfonyl] urea); triazolopyrimidines, such as Flumetsulam (*i.e.* 2',6'-difluoro-5-methyl[1,2,4]triazolo[1,5-*a*]pyrimidine-2-sulfonanilide); and Penoxsulam (*i.e.* 2-(2,2-difluoroethoxy)-N-(5,8-dimethoxy[1,2,4]triazolo[1,5-c]pyrimidin-2-yl)-6-(trifluoro-methyl)benzenesulfonamide); a triazine, such as Atrazine (*i.e.* 6-chloro-N-ethyl-N'-(1-methylethyl)-1,3,5,-triazine-2,4-diamine); a phenyl urea herbicide, such as Diuron (*i.e*.3-(3,4-dichlorophenyl)-1,1-dimethylurea); an insecticide, such as Aldicarb (*i.e.* 2-methyl-2-(methylthio)propionaldehyde-O-methylcarbamoyloxime); Carbaryl (*i.e.* 1-naphthyl methylcarbamate); and Diflubenzuron (*i.e.* N-[[(4-chlorophenyl)-amino]carbonyl]-2,6-difluorobenzamide).

The present inventors have found that the addition of certain long hydrocarbon chain organic acids or salts thereof, having C₈-C₂₀ hydrocarbyl moieties, to the above-described formulation for use in an anti-settling and physically stabilizing system produces particular advantages. Accordingly, the formulation of the present invention may further comprise at least one long hydrocarbon chain organic acid or acid salt.

The organic acid salt is preferably selected from a salt of a fatty acid; a salt of a substituted or unsubstituted linear or branched alkyl or alkenyl group; and a salt of a substituted or unsubstituted aryl group.

Where the organic acid salt comprises a fatty acid salt, the fatty acid is preferably selected from a C₈-C₁₈ fatty acid, such as oleic acid, stearic acid, myristic acid, palmitic acid, lauric acid and polyhydroxystearic acid. The salt-forming cation is selected from sodium, calcium, magnesium, potassium, aluminium, ammonium, alkylammonium, or alkanolammonium ions. The fatty acid salt is more preferably selected from sodium oleate, potassium oleate, sodium stearate, calcium dioleate, calcium distearate and calcium polyhydroxystearic acid.

Where the organic acid salt comprises a salt of an alkyl group, the hydrocarbyl moiety is preferably selected from a C₁₀-C₁₈ carbon chain. The alkyl group is preferably an unsubstituted linear alkyl group. The salt-forming anion of the organic acid is preferably selected from a sulphate, sulphonate, phosphate or phosphonate ion; and the salt-forming cation is preferably selected from sodium, calcium, magnesium, potassium, aluminium, ammonium, alkylammonium, or alkanolammonium ions. In one preferred embodiment, the organic acid salt is sodium lauryl sulphate.

Where the organic acid salt comprises a salt of an alkenyl group, the hydrocarbyl moiety is preferably selected from a C₁₂-C₁₆ carbon chain. The alkenyl group is preferably an unsubstituted linear alkenyl group. The salt-forming anion of the organic acid is preferably selected from a sulphate, sulphonate, phosphate or phosphonate ion. The salt-forming anion of the organic acid is most preferably a sulphonate ion. The salt-forming cation is preferably selected from sodium, calcium, magnesium, potassium, aluminium, ammonium, alkylammonium, or alkanolammonium ions. In another preferred embodiment, the organic salt comprising an alkenyl group is a sodium salt of an olefin sulphonate blend.

Where the organic acid salt comprises the salt of an aryl group, in one preferred form, the aryl group is preferably an alkylaryl group, wherein the alkyl chain is preferably selected from a C₁₀-C₁₆ carbon chain. The alkyl chain is more preferably linear. The salt-forming anion of the organic acid is preferably selected from a sulphate, sulphonate, phosphate or phosphonate ion. In yet another preferred embodiment, the organic acid salt comprising an alkylaryl group is linear alkylbenzene sulphonate.

Prior to an OD formulation being broadcast normally *via* foliar spray, it is diluted in water and so requires the presence of surfactant emulsifiers. However, in the case of an OF formulation, as the formulation is designed to be further diluted in an oil, surfactant emulsifiers are not required. The formulation is otherwise similar to an OD formulation. It is a requirement of an OD formulation that the active ingredient be present in a finely divided state in an oil. Suitable oil phases for OD and OF formulations include any liquid at ambient temperature, which does not dissolve the active ingredient enough to cause crystal growth or physical instability.

The oil, which is typically present in an anti-settling and physically stabilizing system may comprise, but is not limited to, a paraffin oil, such as a kerosene, for example, one of the EXXSOL® D range available from Exxon Chemical and more preferably, EXXSOL® D130; PROPAR®12 available from Caltex; and HYDROSEAL® G250H available from Total. Seed oil esters, such as methyl and ethyl oleate, methyl and ethyl soyate and their corresponding fatty acids are also suitable. Aromatic hydrocarbons, such as alkyl benzenes and alkylnaphthalenes, polyalkylene glycol ethers, fatty acid diesters, fatty alkylamides and diamides, dialkylene carbonates, ketones and alcohols may also be suitable.

The suspension formulation of the invention may comprise further additives, such as a surfactant emulsifying agent to be added once the active ingredient has been suspended in the oil; to allow the oil phase to be delivered in an emulsified form; a surfactant dispersant and physical stability agents other than those of the invention, which may function as anti-settling or anti-syneresis agents. Where present, the surfactant dispersant can be included in any suitable amount up to the level required for colloidal stabilization of the solid phase after milling.

A surfactant dispersant suitable for OD and OF formulations is selected from fatty acid-polyalkylene glycol condensates, such as TERSPERSE® 2510 dispersant; polyamine-fatty acid condensates, such as TERSPERSE® 4890 dispersant; random polyester condensates, such as TERSPERSE® 2520 dispersant; and salts of polyolefin condensates, such as TERSPERSE® 2422 dispersant, which are all products of Huntsman Corporation.

The choice of emulsifiers for the OD formulation tends to be dictated by the type of oil used. Generally, surfactants with a low hydrophobe-lipophobe balance ("HLB") are suitable. The HLB required for most oil phases used in OD or OF formulations is usually below 10. Such surfactants are preferably selected from, but are not limited to, one or more ethoxylated fatty alcohols, sorbitan esters and their corresponding ethoxylates, ethoxylated fatty acids, ethoxylated castor oil, calcium and ammonium and alkylammonium salts of alkylbenzene sulphonate, alkylsulphosuccinate salts, ethylene oxide-propylene oxide block copolymers, ethoxylated alkylamines and ethoxylated alkyl phenols.

The emulsifiers for an OD formulation comprising Mancozeb as the active ingredient, for example, can be selected from the group of castor oil ethoxylates, in particular TERMUL® 3512 emulsifier, alcohol ethoxylates in particular TERIC® 12A3, 12A4 and 17A2 fatty acid ethoxylates such as TERIC® OF6, sorbitan ester ethoxylates, such as ECOTERIC® T85, a sulphosuccinate, such as TERMUL® 3665 emulsifier, amine and calcium salts of dodecylbenzene sulphonate, such as the NANSA® EVM range of products, all of which are available from Huntsman Corporation.

Additional emulsifiers may be added as required to maintain the internal structure and viscosity of the formulation. In these circumstances, the formulation of the present invention further preferably comprises an emulsifier having a higher than usual HLB of the continuous oil phase. While uncertain as to the exact mechanism involved, the present inventors believe that the addition of a more hydrophilic molecule may assist in the internal structural reorganization of the formulation.

The additional agents are more preferably selected from one or more alkyl alkoxylates or ethylene oxide/propylene oxide diblock copolymers or alkyl initiated ethylene oxide/propylene oxide monoblock copolymers, which have an HLB exceeding the required HLB of the continuous oil phase. The agents more preferably have an HLB above about 10 and most preferably, an HLB of about 13.

The alkyl alkoxylate is preferably selected from an alcohol ethoxylate, wherein the ethoxylate is most preferably based on a fatty alcohol comprising a C₁₀-C₁₈ chain and wherein the number of moles of ethylene oxide added exceeds 20. In one preferred embodiment, the alkoxylate is EMPILAN® KM 20 surfactant, which is available from Huntsman Corporation.

The most preferred of the ethylene oxide/propylene oxide block copolymers is one which has a HLB above about 10 and wherein the molecular weight exceeds 2500amu, such as for example, a diblock copolymer selected from TERIC® PE75, TERIC® PE103 and butylalkyl initiated monoblock copolymers, such as TERMUL® 5429, which are all available from Huntsman Corporation.

Further additives which may be added to the formulation include colorants, such as pigments and dyes; adjuvant surfactants; pH adjusters and other chemical stabilizers; defoamers; perfumes; odour masks; and further density-adjusting solvents. The formulation may further comprise safeners.

The scope of the present invention also extends to the premix composition as defined hereinabove comprising the unsaturated rubber-type copolymer, an oil, a surfactant dispersant suitable for dispersing hydrophobic solid media in an oil, wherein the surfactant dispersant comprises at least one polyalkylene glycol-fatty acid condensate and optionally, an organic acid or organic acid salt.

The rubber-type copolymer in the premix composition is preferably present in the range of 4 - 20% w/w. The oil is preferably present in the premix composition in the range of 80 - 95% of the total composition. If present, the organic acid salt in the premix composition is preferably present in the range of 0 - 15% w/w of the total composition and more preferably, in the range of 10 - 15% w/w of the total composition. The amount of surfactant dispersant in the premix composition is preferably present in the range of 2.0 - 3.0% w/w of the total composition.

In yet a further aspect, the scope of the present invention extends to a method of preparing an oil-based suspension formulation from an initial pre-mix composition. The pre-mix composition is preferably made by dissolving the unsaturated rubber-type copolymer of the invention in the oil by heating at high temperature, typically 70 - 100° C and preferably, 80 - 90° C to give a clear homogenous liquid free of gel and un-dissolved solids. It is usually the case that only efficient stirring is required to achieve this. To the oil solution, can then be added the organic acid or salt thereof, which substantially disperses or dissolves in the solution. The mixture of copolymer, organic acid or salt thereof and oil is then preferably cooled to 60° C after which an amount of dispersant can be substantially dissolved in the premix composition. The premix composition can then be cooled to ambient temperature and stored to be used at a later date. Alternatively, the solid phase (active ingredient) can preferably be added to the premix composition upon reaching 60° C or below.

In a still further preferred aspect, the present invention is directed to a method of preparing an oil-based agrochemical suspension formulation, such as an OD or OF formulation, comprising the steps of preparing a premix composition preferably in accordance with the method of the invention described above and then substantially dispersing the active ingredient in the premix composition without, or together with, further oil and optionally, further dispersant. Since the premix composition is typically used in the final formulation at around 10% concentration, the rubber-type copolymer is preferably present in the final formulation in the range 0.05 - 2% w/w and most preferably, in the range 1.0 - 2.0% w/w. Similarly, if present, the organic acid or salt thereof in the final formulation is preferably present in the range of 0 - 1.5% w/w of the total composition and more preferably, in the range of 0.4 - 1.0% w/w. The amount of surfactant dispersant in the final formulation is preferably present in the range of 2.0 - 5% w/w of the total composition. The balance of the final OD/OF formulations comprises the oil component.

The active ingredient is normally dispersed in the premix composition with high shear mixing, such as is obtained by a Silverson® mixer, and then milled under very high shear conditions, such as is obtained in a bead mill, such as a Dynomill® KDL. Milling is normally required to reduce the particle size of the active ingredient into a range suitable to prevent sedimentation within hours and also such as to provide suitable efficacy when applied. Such particle size required is normally influenced by the respective densities of the active and the oil phase; however, typically an average size of 1 - 10 microns and preferably, 1 - 3 microns is required.

The invention described herein in yet a further aspect is a method of preparing an OD formulation comprising an active ingredient comprising the steps of:
a) preparing a premix composition in accordance with the method described above;
b) dispersing the active ingredient in the premix composition without, or together with, further oil and optionally, further dispersant;
c) milling the active ingredient dispersion to achieve a particle size average in the range 1-12 microns;
d) optionally adding at least one further organic acid or salt thereof;
e) adding surfactant emulsifying agents; and
f) optionally adjusting the final content of the active ingredient by adding further oil to achieve a continuous phase,
wherein steps a) to e) are carried out in any order.

In one particularly preferred embodiment of the present invention, the active ingredient comprises Mancozeb, preferably in a concentration of greater than 400g/L. In another preferred form, the formulation comprises Mancozeb in a concentration greater than 580g/L. The present inventors have advantageously been able to produce a formulation comprising Mancozeb in a concentration of greater than 480g/L, which formulation has been found to be stable long-term with no adverse effects on viscosity. In this formulation, no hard-packed layer is observed and the formulation remains fluid/pourable when stored for a time period of longer than 6 weeks at 54° C. The advantage provided by the present invention is that it achieves a superior stable high loading suspension formulation of Mancozeb, where alternative anti-settling agents, such as modified hectorite clays, appear to be ineffective.

The present inventors have found that by the use of a premix composition of the polymer stabilizer in an oil, which may or may not constitute the primary part of the dispersing medium, greatly enhanced stability in difficult OD and OF formulations tested can result. Once formulated, an OD or OF formulation produced by the method of the present invention would be expected to exhibit stability on storage at temperatures ranging from -5° C to 54° C for up to 2 weeks and also stability at ambient temperature for up to 2 years.

### Detailed Description of the Invention

The following description relates only to specific embodiments of the present invention and is in no way intended to limit the scope of the present invention to those specific embodiments. In particular, the following description is exemplary rather than limiting in nature. Variations and modifications to the disclosed methods may become apparent to those skilled in the art that do not necessarily depart from the essence of this invention.

The invention will now be described with reference mainly to high loading suspension formulations of Mancozeb, Diuron, Atrazine and Captan, respectively. It is anticipated that similar results can be found for suspension formulations in oil of other solid active ingredients, which are not soluble in the continuous phase.

A typical OD formulation would have a composition as described in Table 1 below.

**Table 1. Typical Components required for an Oil Dispersion Formulation**

| **Component** | **Typical amount, % w/w** | **Purpose** |
|---|---|---|
| Active ingredient | < 60 | As a toxicant |
| Dispersant (oil soluble) | 3 - 8 | To prevent particle aggregation |
| Emulsifier | 5 - 20 | To emulsify the oil phase when the formulation is added to water |
| Anti-settling and structuring agents | 0.5 - 5 | To prevent sedimentation and syneresis |
| Oil | balance | To form a continuous phase |

### EXAMPLES

### Rheological Studies

A combination of oil and rubber-type copolymer was made without active ingredient to examine the effect of adding the organic acid salts including fatty acid salts, sulphate and sulphonate salts; high HLB non-ionic surfactants; dispersants and emulsifiers to the system. This gives a model for the later formulations which are demonstrated.

### Flow and Oscillation measurement:

Measurements have been conducted using an AR 2000ex rheometer from TA instruments.

### Flow procedure:

Cone geometry 4cm 2°, gap 51 µm or plate geometry 4cm, gap 150 µm; emperature 20° C; shear rate from 0 s⁻¹ to 100 s⁻¹, peak hold at 100 s⁻¹ and rate down from 100 s⁻¹ to 0 s⁻¹

### Temperature sweeps:

Cone geometry 4cm 2°, gap 51µm or plate geometry 4cm, gap 150 µm; temperature sweep from 5° C to 55° C at defined % strain within LVR and frequency of 1Hz.

Examples 1 to 4 look at the effect of dispersants and emulsifiers on the rubber-type copolymer in oil.

### Example 1

### Preparation of rubber-type copolymer base

To 88 parts w/w PROPAR® 12 is added 4 parts KRATON® G1701. The resultant blend is heated with stirring at 70° C for several hours until a gel is formed. The gel formed is hereafter referred to as KRATON® base.

### Example 2

To 90% w/w of KRATON® G1701 base from Example 1 is added 10% w/w TERPSERSE® 2510 with heating at 40° C until the latter is dissolved.

### Example 3

To 90% w/w of KRATON® G1701 base of Example 1 is added 10% of a 1:1 blend of ECOTERIC® T85 (sorbitan trioleate ethoxylate) and EMPILAN® KBE 3 (alcohol ethoxylate). The reference name of this blend is EDSA 08/09. These are typical oil in water emulsifiers that would be utilised in the emulsification of PROPAR® 12 oil.

### Example 4

To 90% w/w of KRATON® G1701 base of Example 1 is added 10% w/w of TERMUL® 3665 (dialkylsulphosuccinate salt in aromatic solvent); another typical emulsifier utilised in the emulsification of PROPAR® 12 type oils.

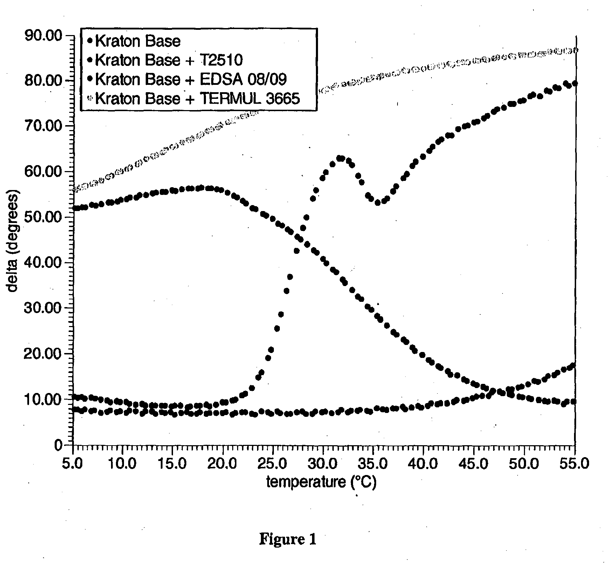

The flow curves for Examples 1 to 4 are shown in Figure 1.

The KRATON® G1701 polymer when present solely in PROPAR® 12 oil, as per Example 1, provides sufficient yield strength and is elastic over the applied temperature range. This shows that it is suitable as a structuring agent for OF formulations.

Addition of TERSPERSE® 2510 dispersant as per Example 2 reinforces the yield strength, but the system looses its elasticity above room temperature. This suggests TERSPERSE® 2510 provides good viscosity at room temperature, but does not afford good stabilisation at the higher temperatures of the required storage conditions for OD formulations.

The use of typical emulsifiers as per Example 3 showed inferior elasticity and hence stability below room temperature, however improvement was seemingly shown as the temperature was increased. This suggests that in the presence of the rubber-type copolymer, these emulsifiers result in lower than optimal structuring effects at lower temperatures.

The use of TERMUL® 3665 as per Example 4 was shown to destroy the yield value during the flow experiment and the elasticity over the full temperature range. Addition of this emulsifier interferes with the yield strength (flow) and the elasticity at lower temperatures. This suggests that TERMUL® 3665 in the absence of other additives inhibits the structure of the rubber-type co-polymer.

Examples 5 to 8 show the effect of adding other dispersants to the KRATON® base.

### Example 5

To 90% w/w of KRATON® base from Example 1 is added 10% w/w polyhydroxystearic acid with heating at 40° C until it is dissolved.

### Example 6

To 90% w/w of KRATON® base from Example 1 is added 10% w/w polyethylene glycol MW 1500 (PEG 1500) with heating at 40° C until homogeneous.

### Example 7

To 90% w/w of KRATON® base from Example 1 is added 10% w/w TERSPERSE® 4890 (polyamine-fatty acid condensate) and stirred until it is dissolved.

### Example 8

To 90% w/w of KRATON® base from Example 1 is added 10% w/w TERSPERSE® 2422 (polyolefin condensate salt) and stirred until it is dissolved.

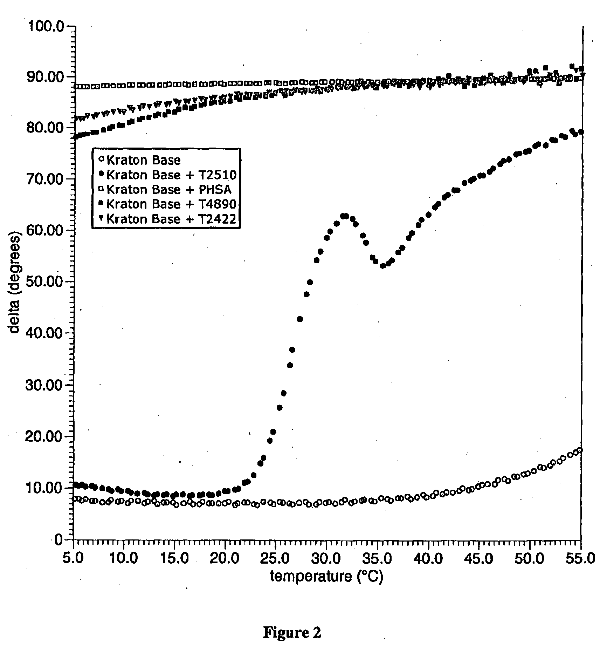

Flow curves for Examples 5 to 8 with comparisons to Examples 1 and 2 are shown in Figure 2.

Addition of polyhydroxystearic acid as per Example 5, TERSPERSE® 4890 as per Example 7 and TERSPERSE® 2422 as per Example 8, displayed a detrimental effect on the structure. Addition of PEG 1500 as per Example 7 showed some beneficial effect.

These Examples suggest that TERSPERSE® 2510 is the most optimal dispersant to use with the rubber-type copolymer in the absence of any other additives.

### Effect of fatty acid salts on Rubber-type Copolymer

Examples 9 to 16 show the effect of the various fatty acid salts in combination with the rubber-type copolymer in HYDROSEAL® oil. (Note: HYDROSEAL® oil is a C₁₂-C₁₈ hydrocarbon oil. It has a lower carbon distribution compared with PROPAR® 12 used in the previous Examples). Example 9 is hereinafter referred to as KRATON®/HYDROSEAL® base.

The rubber-type copolymer premix was prepared as described for Examples 1 and 2. The fatty acid salts were incorporated either by readily dispersing the salts, using an overhead stirrer, or where required via high shear mixing.

### Compositions used in Examples 9 to 16

| **Components** | **Example No.** | | | | | | | |
|---|---|---|---|---|---|---|---|---|
| | **9** | **10** | **11** | **12** | **13** | **14** | **15** | **16** |
| KRATON® G-1701 | 4.00 | 4.00 | 4.00 | 4.00 | 4.00 | 4.00 | 4.00 | 4.00 |
| HYDROSEAL® G250 H | 96.00 | 93.50 | 93.25 | 90.75 | 93.25 | 90.75 | 93.25 | 90.75 |
| Sodium oleate | - | - | 2.75 | 2.75 | - | - | - | - |
| Sodium stearate | - | - | - | - | 2.75 | 2.75 | - | - |
| Calcium stearate | - | - | - | - | - | - | 2.75 | 2.75 |
| TERSPERSE® 2510 | - | 2.5 | - | 2.50 | - | 2.50 | - | 2.50 |

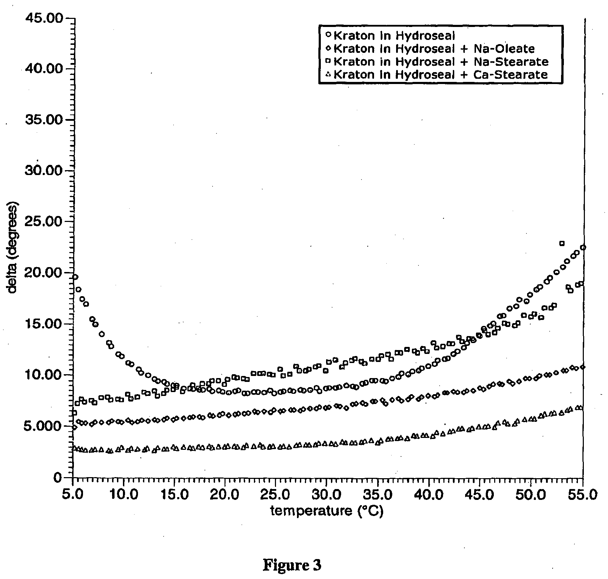

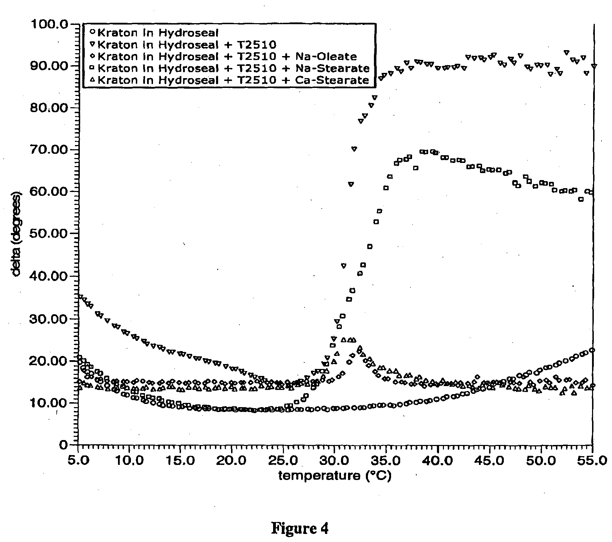

Flow curves for Example 9 to 16 are shown in Figure 3 and Figure 4.

Figure 3 shows the effect of adding the fatty acid salt to the KRATON®/HYDROSEAL® base. In all cases, good elasticity over the required temperature range with an enhanced effect over the base when used alone was achieved.

Figure 4 shows the effect of adding fatty acid salt to the KRATON®/HYDROSEAL® base in the presence of TERSPERSE® 2510 dispersant. It can be seen that the fatty acid salts compensate for the loss of elasticity of TERSPERSE® 2510 at higher temperatures, with sodium oleate and calcium stearate performing best.

### Effect of sulphate and sulphonate salts on the Rubber-type Copolymer

Examples 17 and 18 show the effect of adding sulphate and sulphonate salts to the KRATON®/HYDROSEAL® base. EMPICOL® LZ/B is a sodium lauryl sulphate salt surfactant. TERWET® 1004 is an olefin sulphonate blend sodium salt surfactant. Examples were prepared in the manner described for Examples 9 - 16.

| **Components** | **Example No.** | |
|---|---|---|
| | **17** | **18** |
| KRATON ® G-1701 | 4.00 | 4.00 |
| HYDROSEAL® G250H | 90.75 | 90.75 |
| EMPICOL® LZ/B | 2.75 | - |
| TERWET® 1004 | - | 2.75 |
| Na-Oleate | - | - |
| TERSPERSE® 2510 | 2.50 | 2.50 |

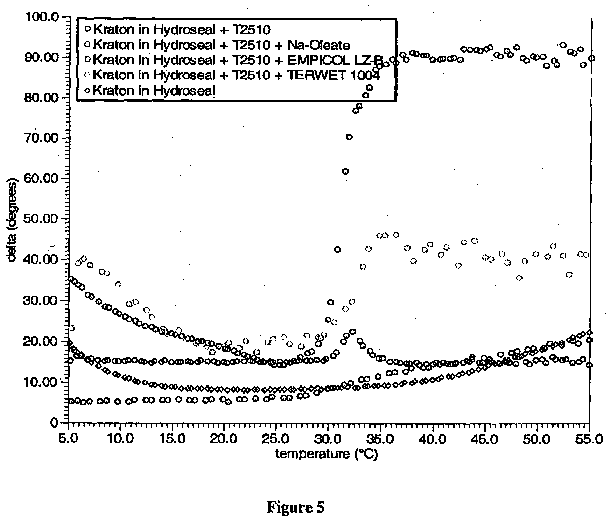

The flow curves for Examples 17 and 18 are shown in Figure 5 with Examples 9, 10 and 12 shown for comparison.

The addition of EMPICOL® LZ/B is similarly beneficial toward retaining the elasticity of the structuring blend containing TERSPERSE® 2510. TERWET® 1004 also partly overcame the loss of elasticity at high temperature encountered by the use of TERSPERSE® 2510.

The conclusion is that alkyl sulphate and alkyl sulphonate salts can behave in a similar manner to fatty acid salts in further assisting the performance of the rubber-type copolymer.

### Effect of adding higher HLB alcohol ethoxylates to the KRATON®/HYDROSEAL® base

This study was conducted with HYDROSEAL® G250H. The KRATON®/HYDROSEAL® base from Example 9 was diluted with 10% HYDROSEAL® G250H and 5% TERSPERSE 2510 before measuring the rheology.

The EMPILAN® KM series are C₁₆-C₁₈ alcohol ethoxylates. The number following KM denotes the number of moles ethylene oxide present.

Examples 19 to 23 show the effect of adding an alcohol ethoxylate to the KRATON®/HYDROSEAL® base in the presence of TERSPERSE® 2510 dispersant.

| **Alcohol C₁₆-C₁₈ Ethoxylate** | **Example No** | **% added to KRATON®/HYDROSEAL® Base + 10% HYDROSEAL® G250H + 5% TERSPERSE® 2510** | **HLB** |
|---|---|---|---|
| EMPILAN® KM 11 | 19 | 5 | 12.9 |
| EMPILAN® KM 20 | 20 | 5 | 15.4 |
| EMPILAN® KM 25 | 21 | 5 | 16.2 |
| EMPILAN® KM 50 | 22 | 5 | 17.8 |
| EMPILAN® KM 80 | 23 | 5 | 18.6 |

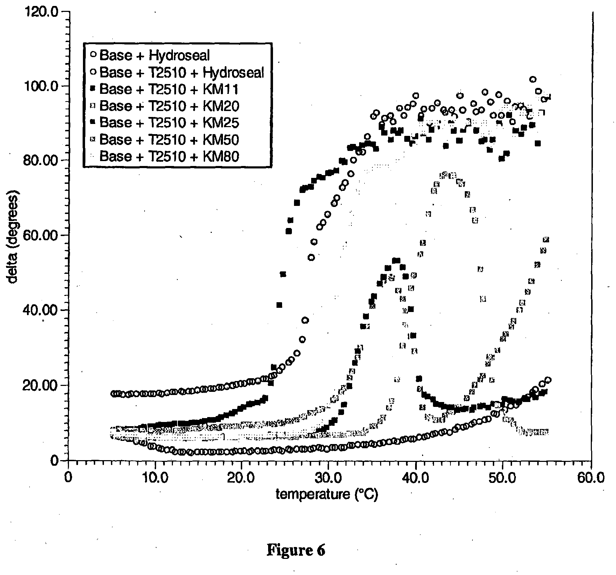

Flow curves for Examples 19 to 23 are shown in Figure 6.

It can be seen from Figure 6 that addition of an alcohol ethoxylate similarly extends the temperature at which the TERSPERSE® 2510 in the KRATON®/HYDROSEAL® base substantially loses its elasticity. The best results are found for the ethoxylation ranges of 20 to 50. It is likely that the 80 mole ethoxylate was too insoluble in the oil phase which may account for its less than optimum performance.

This suggests a beneficial effect of adding an alcohol ethoxylate of an HLB of greater than 10, *i.e.* greater than is required to emulsify the oil, with an HLB above 13 showing the best effect.

### Formulation Examples

A range of example **OD formulations** have been prepared using KRATON® G-1701 to determine the functional rheological effects imparted upon basis model formulations using three agricultural active ingredients. KRATON® G-1701 is used either solely as a pre-prepared gel with aromatic solvent, as a pre-prepared gel using paraffin oil, or in conjunction with various organic acid salts.

All formulations were subject to accelerated storage at 54° C unless stated otherwise and where possible, suspensibility measurements were conducted pre-storage at 2% w/v in 20ppm ambient water according to CIPAC MT 161. Despite such testing not being an official requirement of the Food and Agriculture Organisation ("FAO") in relation to OD formularies, in this instance, residue suspensibilities were determined to best characterise the quality of the oil/solid dispersion once diluted.

### Example 24 (Comparative)

### Preparation of an OD formulation comprising a Bentone® anti-settling agent

The formulation was prepared as follows:

| | |
|---|---|
| Mancozeb (85% w/w technical) | 567 g/L |
| TERSPERSE® 2510 dispersant | 70 |
| SURFONIC® LF17 surfactant | 15 |
| SURFONIC® P3 surfactant | 15 |
| SURFONIC® TDA3B surfactant | 10 |
| TERSPERSE® 2202 dispersant | 5 |
| Bentone® IPM | 5 |
| EXXSOL® D130/HYDRQSEAL® H250G (50:50 blend) | to Volume (1 Litre) |

The formulation was made in the manner known to those skilled in the art by dissolving the oil dispersant TERSPERSE® 2510 dispersant in 90% of the oil phase and adding the Mancozeb (85% w/w technical) powder to it with high shear mixing to form a slurry which was then milled by bead mill to produce a millbase at an average particle size (d_{0.5}) of less than 5 microns (µm). To the millbase is then added the other surfactants and the Bentone® thickener with stirring.

The formulation was placed on storage at 54° C. While the emulsification of this formulation was satisfactory, after less than 5 days the formulation formed into a thick gel with a hard packed sediment layer which was not redispersible.

This formulation demonstrates that even relatively high amounts of the Bentone® thickener are not able to prevent sedimentation and also afford a satisfactory viscosity for this product.

### Preparation of OD Formulations without structuring agent

### Example 25 (Comparative)

The formulation was prepared as follows:

| | |
|---|---|
| Diuron (98% w/w technical) | 511 g/L |
| TERSPERSE® 2510 dispersant | 47.5 |
| TERMUL® 3665 emulsifier | 75 |
| HYDROSEAL® G250H | to Volume (1 Litre) |

The formulation was prepared by adding the Diuron active to the oil and TERSPERSE® 2510 dispersant with shear mixing to make a 58%w/w premix. This premix was then milled to an average particle size of less than 2 microns to give a millbase. To the millbase was added TERMUL® 3665 emulsifier with high shear mixing (7000rpm, 2 minutes) then further HYDROSEAL® G250H was added to volume.followed by further high shear mixing until homogeneous.

The formulation was placed on storage at 54° C and 20° C and after 7 days, a thick hard pack layer was observed. The formulation also showed 53% syneresis.

### Example 26 (Comparative)

### OD Formulation made using Diuron 400g/L as the active ingredient

The formulation was prepared as follows:

| | |
|---|---|
| Diuron (95% w/w technical) | 421.05 g/L |
| TERSPERSE® 2510 | 40.00 |
| TERIC® 12A3N | 100.00 |
| TERMUL® 3665 | 15.00 |
| Rheology Modifier/structuring agent | - |
| EXXSOL® D130 | to Volume (1 litre) |

To an appropriately sized beaker, approximately 150g/L EXXSOL® D130 was added, followed by the required amounts of TERSPERSE® 2510, TERIC® 12A3N and TERMUL® 3665. The mixture was then subject to moderate heating (approx. 30 - 40° C) for several minutes, then exposed to high shear mixing to form a homogeneous pre-dispersion. Once cooled to ambient temperature, the required amount of un-milled Diuron (95% w/w technical) was dispersed and high shear mixing was continued for several minutes. The formulation was then allowed to settle, made to the required volume with further EXXSOL® D130 (if necessary), and returned to shear until homogeneous.

The formulation initially appears as a homogeneous white dispersion of relative low viscosity, that when diluted in 20ppm ambient water emulsifies readily. Of note is the development of syneresis within several minutes. Following storage for 14 days at 54° C, it was observed that the above formulation had developed 55% syneresis in association with the presence of a permeable yet somewhat rigid gel-like matrix which upon stirring proved difficult to fluidise.

The formulation demonstrates relatively poor stability afforded by a lack of suitable rheology modifier.

### Example 27 (Comparative)

### OD Formulation made using Atrazine 400g/L as the active ingredient

The formulation was prepared according to the method outlined in Example 26:

| | |
|---|---|
| Atrazine | 400.00 g/l |
| TERSPERSE® 2510 | 40 |
| TERIC® 12A3N | 100 |
| TERMUL® 3665 | 15.00 |
| EXXSOL® D130 | to Volume (1 litre) |

The formulation initially appears as a homogeneous white dispersion of a relative intermediate viscosity which gives suitable emulsification performance in 20ppm ambient water. Following storage for 14 days at 54° C, the formulation displayed 48% syneresis with the bulk consisting of a homogeneous easily permeable gel-like structure that through stirring was reversible to a flowable consistency similar to its pre-storage appearance.

### Preparation of an OD formulation using Rubber-type Copolymer (KRATON® G-1701 polymer) as anti-settling agent directly

### Example 28

KRATON® G-1701 polymer is described as a polymer of styrene and polyethylene/polypropylene as a diblock.

The following formulation was prepared in a manner similar to that used for Example 24; however, the KRATON® G-1701 polymer and the sodium oleate were added prior to milling with high shear mixing:

| | |
|---|---|
| Mancozeb (85% w/w technical) | 567 g/L |
| TERSPERSE® 2510 dispersant | 70 |
| KRATON® G-1701 polymer | 11 |
| Potassium oleate | 5 |
| TERMUL® 5429 emulsifier | 15 |
| SURFONIC® P3 surfactant | 15 |
| SURFONIC® TDA3B surfactant | 10 |
| TERSPERSE® 2202 dispersant | 5 |
| HYDROSEAL® G250H | to Volume (1 Litre) |

The formulation was placed on storage for 2 weeks at 54° C, after which time it showed a significant increase in viscosity, but no signs of a hard-pack layer of flocculation.

This formulation affords some improvement in storage stability. However, the emulsification characteristics upon dilution in water were poor.

### Examples using structuring agent premix composition comprising oil and fatty acid salt

### Example 29

### Preparation of the structuring agent premix:

The premix composition was prepared as follows:

| | |
|---|---|
| KRATON® G-1701 polymer | 4 % w/w |
| TERSPERSE® 2510 dispersant | 2.5 |
| Sodium oleate | 2.75 |
| EXXSOL® D130 | 90.75 |

The total amount of oil required is heated to 80° C - 90° C. The KRATON® G-1701 polymer is added to the hot oil and using efficient stirring solubilised to give a clear, gel/bit free liquid.

The sodium oleate is then dispersed evenly in the KRATON® G-1701 polymer/oil mixture. The mixture is maintained at 80° C - 90° C whilst being stirred until homogeneous in appearance before allowing to the mixture to cool to 60° C.

When the oil mixture reaches 60° C, TERSPERSE® 2510 dispersant is added and dispersant is fully dissolved in the oil mixture.

Once prepared, the mixture can be used at 60° C or cooled to ambient temperature and stored for later use. The mixture remains quite stable and fluid on storage.

### Example 30

### Preparation of a Mancozeb (480g/L) formulation comprising the OD premix composition

The formulation was prepared as follows:

| | |
|---|---|
| Mancozeb (85% w/w technical) | 567 g/L |
| TERSPERSE® 2510 dispersant | 67.65 |
| Structuring agent blend from Example 29 | 94 |
| TERMUL® 5429 emulsifier | 15 |
| SURFONIC® P3 surfactant | 15 |
| SURFONIC® TDA3B surfactant | 10 |
| TERSPERSE® 2202 dispersant | 5 |
| EXXSOL® D130 | to Volume (1 Litre) |

Further TERSPERSE® 2510 dispersant is added to the oil blend prepared in Example 29 together with 90% of the remaining oil required. Immediately after the TERSPERSE® 2510 dispersant has solubilised in the oil by high sheer mixing for up to 15 minutes, the Mancozeb (85% w/w technical) is added to the oil blend with continued high shear mixing. The Mancozeb pre-mix is transferred to a bead mill and milling is continued until an average particle size (d_{0.5}) of less than 5 microns (µm) is obtained.

The emulsifiers are then added one at a time to the milled pre-mix under high shear mixing ensuring that each emulsifier was completely homogenised.

The final formulation is then made up to volume with further EXXSOL® D130.

The formulation was placed on storage for 2 weeks at 54° C after which time it showed only a minor increase in viscosity and no signs of a hard-pack layer of flocculation and minimal (<1%) syneresis. The emulsion characteristics upon dilution in water in water were improved compared to previous Examples, but were still less than optimal.

### Example 31

### Preparation of a Mancozeb (567g/L) formulation comprising the OD premix composition

The following formulation was prepared according to the method described in Example 30:

| | |
|---|---|
| Mancozeb (85% w/w technical) | 667.06 g/L |
| TERSPERSE® 2510 dispersant | 67.5 |
| Structuring agent blend from Example 29 | 100 |
| TERMUL® 3665 emulsifier | 70 |
| EXXSOL® D130 | to Volume (1 Litre) |

The formulation was placed on storage for 2 weeks at 54° C. The formulation showed excellent storage stability with no increase in formulation viscosity or hard packed layer and (<1%) syneresis. The emulsion characteristics upon dilution in water were greatly improved. This formulation still showed good flowability after 6 weeks at 54°C

### Example 32

### Premix comprising EXXSOL® D-130 without fatty acid salt

The following structuring agent was prepared:

| | |
|---|---|
| KRATON ® G-1701 polymer | 4 % w/w |
| TERSPERSE® 2510 dispersant | 2.5 |
| EXXSOL® D130 | 93.5 |

The total amount of oil required is heated to 80° C - 90° C. The KRATON® G-1701 polymer is added to the hot oil and using efficient stirring solubilised to give a clear, gel/bit free liquid.

The mixture is maintained at 80° C - 90° C whilst being stirred until homogeneous in appearance before allowing to the mixture to cool to 60° C.

When the oil mixture reaches 60° C TERSPERSE® 2510 dispersant is added and dispersant is fully dissolved in the oil mixture.

Once prepared the mixture can be used at 60° C or cooled to ambient temperature and stored for later use. The mixture remains quite stable and fluid on storage.

### Example 33

### Formulation made using premix of Example 32.

The following formulation was made by the method described in Example 30:

| | |
|---|---|
| Mancozeb (85% w/w technical) | 667.06 g/L |
| TERSPERSE® 2510 dispersant | 67.5 |
| Structuring agent blend from Example 32 | 100 |
| TERMUL® 3665® emulsifier | 70 |
| EXXSOL® D130 | to Volume (1 Litre) |

After storage at 54° C for 2 weeks, the formulation showed a slight increase in viscosity with no signs of a hard-pack layer or flocculation. The emulsion characteristics upon dilution in water were similar to Example 30.

### Example 34

The following premix comprising SOLVESSO® 150 was prepared:

| | |
|---|---|
| KRATON® G-1701 | 18.18% w/w |
| SOLVESSO® 150 | 81.88 |

To an appropriate vessel, the required amount of SOLVESSO® 150 and KRATON® G-1701 are added. The resultant mixture is then heated with moderate stirring until such point that a gelatinous yet flowable homogeneous consistency is observed. On cooling, the viscosity increases further forming a workable gel, which is stored for later use.

### Example 35

The following **OD formulation** was prepared:

| | |
|---|---|
| Diuron (95% w/w technical) | 421.05 g/l |
| TERSPERSE® 2510 | 40.00 |
| TERIC® 12A3N | 100.00 |
| TERMUL® 3665 | 15.00 |
| Structuring blend from Example 34 (comprising KRATON® G-1701 and SOLVESSO® 150) | 40.00 |
| EXXSOL® D130 | to Volume (1 litre) |

To an appropriately sized beaker, approximately 150g/L EXXSOL® D130 was added, followed by the required amounts of the remaining inert components. The mixture was then subject to moderate to high heating (approx. 50 - 60° C) until the structuring agent had incorporated, then high shear mixing was initiated to form a homogeneous predispersion. Once cooled to ambient temperature, the required amount of un-milled Diuron (95% w/w technical) was dispersed and high shear mixing was continued for 5 minutes. The formulation was then allowed settle, made to the required volume with further EXXSOL® D130 (if necessary), and returned to shear for 10 minutes to ensure homogeneity.

The formulation initially appears as a homogeneous white dispersion of a relative intermediate viscosity. When diluted in ambient 20ppm water, a residue suspensibility of 78.0% is observed after 30 minutes. Following storage for 7 days at ambient laboratory temperatures, 45% syneresis was observed, while the remaining settled bulk suspension displayed an easily permeable gel matrix which via stirring was reversible yielding a homogeneous fluid dispersion.

The formulation demonstrates that although initially rheology modification is observed, antagonism arises from the presence of traditional oil emulsifiers and aromatic solvent.

### OF Formulations i.e. Examples without emulsifying agents

### Example 36

The following **OF formulation** was prepared:

| | |
|---|---|
| Diuron (98% w/w technical) | 511 g/L |
| TERSPERSE® 2510 dispersant | 47.5 |
| Structuring agent blend from Example 29 | 80 |
| HYDROSEAL® G250H | to Volume (1 Litre) |

The formulation was prepared by adding the Diuron active to the oil and TERSPERSE® 2510 dispersant with shear mixing to make a 58% w/w premix. This premix was then milled to an average particle size of less than 2 microns to give a millbase. To the millbase was added the structuring premix of Example 3 with high shear mixing.

The formulation was placed on storage at 54° C and 20° C and after 7 days, no hard pack layer was observed. The formulation also showed only 20% syneresis, which is a marked improvement over the Example without structuring agent.

### Example 37

The following **OF formulation** was prepared according to the method outlined in Example 35:

| | |
|---|---|
| Diuron (98% w/w technical) | 408.16 g/l |
| TERSPERSE® 2510 | 40.00 |
| Structuring blend from Example 34 | 40.00 |
| EXXSOL® D130 | to Volume (1 litre) |

The formulation initially appears as a homogeneous white dispersion of a relative low viscosity. When diluted in ambient 20ppm water, poor suspensibility is observed due to the lack of appropriate emulsifier. Following storage for 6 days at ambient laboratory temperatures, the formulation remained homogeneous and flowable with 7.5% syneresis. After the same period at 54° C, the formulation although flowable displayed 56.1% syneresis.

Under ambient conditions, the formulation demonstrates the expected improved performance with the exclusion of traditional oil emulsifiers in comparison to Example 35.

### Example 38

The following **OF formulation** was prepared according to the method outlined in Example 35, noting however that in this instance KRATON® G-1701 was added neat to yield a heightened use-rate:

| | |
|---|---|
| Diuron (98% w/w technical) | 408.16 g/l |
| TERSPERSE® 2510 | 40.00 |
| KRATON® G-1701 | 14.63 |
| EXXSOL® D130 | to Volume (1 litre) |

The formulation initially appears as a homogeneous white dispersion of a relative low to intermediate viscosity. When diluted in ambient 20ppm water, poor suspensibility is observed due to the lack of appropriate emulsifier. Following storage for 6 days at ambient laboratory temperatures, the formulation remained flowable with trace syneresis observed. After storage for the same period at 54° C, the bulk formulation remained flowable, with 55.0% syneresis observed.

The formulation highlights improved stability relating to the exclusion of antagonistic emulsifier and aromatic solvent.

### Examples using Rubber-type Copolymer without fatty acid

### Example 39

The following **OD formulation** was prepared:

| | |
|---|---|
| Diuron (98% w/w technical) | 520 g/L |
| TERSPERSE® 2510 dispersant | 50 |
| Structuring agent blend from Example 32 | 80 |
| TERMUL® 3665 emulsifier | 75 |
| HYDROSEAL® G250H | to Volume (1 Litre) |

The formulation was prepared by making a 58% w/w millbase, as described in Example 36. To the millbase was added the structuring premix of Example 32 and TERMUL® 3665 emulsifier with high shear mixing.

The formulation was placed on storage at 54° C and 20° C and after 7 days, no hard pack layer was observed. The formulation showed 32% syneresis, which is still a marked improvement over the Example without structuring agent.

Further optimisation of the level of structuring premix and dispersant can be anticipated to make this formulation achieve an acceptable level of syneresis.

### Example 40

The following **OD formulation** was prepared according to the method outlined in Example 35, noting however in this instance that KRATON® G-1701 was added neat to yield a heightened use-rate:

| | |
|---|---|
| Diuron (98% w/w technical) | 421.05 g/l |
| TERSPERSE® 2510 | 40.00 |
| TERIC® 12A3N | 100.00 |
| TERMUL® 3665 | 15.00 |
| KRATON® G-1701 | 20.00 |
| SOLVESSO® 200 | 15.00 |
| EXXSOL® D130 | to Volume (1 litre) |

The formulation initially appears as a homogeneous white dispersion of a relative high viscosity. When diluted in ambient 20ppm water, a residue suspensibility of 76.2% is observed after 30 minutes. Following storage for 14 days at 54° C, 41.7% syneresis was observed, while the remaining settled bulk suspension had thickened into a non-flowable state that via stirring was reversible yielding a homogeneous fluid dispersion. After the same period at ambient laboratory temperatures, the formulation displayed the same characteristics however 32.1% syneresis was measured.

The formulation demonstrates that despite the initial high viscosity, heightened use-rate of KRATON® G-1701 does not fully overcome the antagonism afforded by the use of typical oil emulsifiers.

### Example 41

The following **OD formulation** was prepared according to the method outlined in Example 35, however only 50g/L of EXXSOL® D130 is added initially:

| | |
|---|---|
| Diuron (98% w/w technical) | 421.05 g/l |
| TERSPERSE® 2510 | 40.00 |
| TERIC® 12A3N | 100.00 |
| TERMUL® 3665 | 15.00 |
| Structuring blend used in Example 29 comprising KRATON® G-1701, TERSPERSE® 2510, sodium oleate and EXXSOL® D130 | 180.00 |
| EXXSOL® D130 | to Volume (1 litre) |

The formulation initially appears as a homogeneous white dispersion of relative low to intermediate viscosity, that when diluted in 20ppm ambient water emulsifies readily. Following storage for 14 days at 54° C, 44% syneresis had developed with the bulk consisting of a homogeneous easily permeable gel-like structure that via stirring was partly reversible to a flowable consistency. After 14 days at ambient temperature, the formulation remains flowable and displays 28% syneresis.

This formulation demonstrates improved stability via use of sodium oleate in conjunction with KRATON® G-1701, whereby the development of syneresis was inhibited. This was notable particularly both post initial preparation and within sample stored at ambient temperature.

### Example 42

The following premix composition comprising more fatty acid salt and SOLVESSO® 150 solvent was prepared:

| | |
|---|---|
| KRATON® G-1701 | 11.27% w/w |
| Sodium oleate | 13.12 |
| SOLVESSO® 150 | 50.67 |
| EXXSOL® D130 | 24.94 |

To an appropriate vessel, the required amount of SOLVESSO® 150, EXXSOL® D130 and KRATON® G-1701 are added. The resultant mixture is then heated to 60° C with moderate stirring until such point that a viscous yet homogeneous consistency is observed. Sodium oleate is then added and stirring is continued to form an opaque flowable gel. On cooling, the viscosity increases further forming a workable gel, which is stored for later use.

### Example 43

The following **OD formulation** was prepared according to the method outlined in Example 35:

| | |
|---|---|
| Diuron (98% w/w technical) | 408.16 g/l |
| TERSPERSE® 2510 | 40.00 |
| TERIC® 12A3N | 100.00 |
| TERMUL® 3665 | 15.00 |
| Structuring blend from Example 42 comprising KRATON® G-1701, sodium oleate, SOLVESSO® 150 and EXXSOL® D130 | 60.00 |
| EXXSOL® D130 | to Volume (1 litre) |

The formulation initially appears as a homogeneous white dispersion of a relative low to intermediate viscosity. When diluted in ambient 20ppm water, the formulation yields a residue suspensibility of 61.0% after 30 minutes. Following storage for 7 days at 54° C, the formulation displayed 31.7% syneresis with the bulk remaining flowable despite some thickening effects. After 7 days at ambient temperature, the formulation remains flowable and homogeneous, with 7.9% syneresis measured.

This formulation demonstrates improved syneresis at both ambient and 54° C storage conditions, particularly the former.

### Example 44

The following **OD formulation** was prepared according to the method outlined in Example 35:

| | |
|---|---|
| Diuron (98% w/w technical) | 408.16 g/l |
| TERSPERSE® 2510 | 80.00 |
| TERIC® 12A3N | 100.00 |
| TERMUL® 3665 | 15.00 |
| Structuring blend from Example 42 comprising KRATON® G-1701, sodium oleate, SOLVESSO® 150 and EXXSOL® D130 | 60.00 |
| EXXSOL® D130 | to Volume (1 litre) |

The formulation initially appears as a homogeneous white dispersion of a relative intermediate viscosity. When diluted in ambient 20ppm water, the formulation emulsifies readily to yield a residue suspensibility of 76.7% after 30 minutes. Following storage for 5 days at 54° C, the formulation displayed only 13.8% syneresis with the bulk suspension remaining flowable. After the same period at ambient temperature, the formulation remains flowable showing only trace syneresis.

The formulation demonstrates the improved effect of using increased levels of TERSPERSE® 2510 alongside the structuring blend from Example 42 comprising KRATON® G-1701, sodium oleate, SOLVESSO® 150 and EXXSOL® D130.

### Example 45

The following formulation was prepared according to the method outlined in Example 35, but in this instance, an alternate polyamine-fatty acid condensate known as TERSPERSE® 4890 is used as the primary dispersant:

| | |
|---|---|
| Diuron (98% w/w technical) | 408.16 g/l |
| TERSPERSE® 4890 | 40.00 |
| TERIC® 12A3N | 100.00 |
| TERMUL® 3665 | 15.00 |
| Structuring blend from Example 42 comprising KRATON® G-1701, sodium oleate, SOLVESSO® 150 and EXXSOL® D130 | 60.00 |
| EXXSOL® D130 | to Volume (1 litre) |

The formulation initially appears as a homogeneous white dispersion of a relative intermediate viscosity. When diluted in ambient 20ppm water, the formulation emulsifies readily to yield a residue suspensibility of 71% after 30 minutes. Following storage for 2 days at 54° C, the formulation displayed 30.8% syneresis with the bulk consisting of a homogeneous easily permeable gel-like structure that through stirring was reversible to a flowable consistency similar to its pre-storage appearance. After 7 days at ambient temperature, the formulation remains flowable showing only 6.8% syneresis.

The formulation demonstrates that the structuring blend from Example 42 comprising KRATON® G-1701, sodium oleate, SOLVESSO® 150 and EXXSOL® D130 can still provide stabilising effects when used alongside and alternate dispersant.

### Example 46

The following formulation was prepared according to the method outlined in Example 35:

| | |
|---|---|
| Atrazine | 400.00 g/l |
| TERSPERSE® 2510 | 32.00 |
| TERIC® 12A3N | 105.00 |
| TERMUL® 3665 | 15.00 |
| Structuring blend from Example 34 comprising KRATON® G-1701 and SOLVESSO® 150 | 20.00 |
| EXXSOL® D130 | to Volume (1 litre) |

The formulation initially appears as a homogeneous white dispersion of a relative intermediate viscosity which gives suitable emulsification performance in 20ppm ambient water. Following storage for 14 days at 54° C, the formulation displayed 25% syneresis with the bulk consisting of a homogeneous easily permeable gel-like structure that through stirring was reversible to a flowable consistency similar to its pre-storage appearance.

This formulation demonstrates marked improvement in stability particularly with regard to syneresis. This can be attributed to the use of the structuring blend outlined in Example 34 which comprises KRATON® G-1701 and SOLVESSO® 150.

### Example showing the effect of a high build EO/PO block copolymer on the Rubber-type Copolymer

### Example 47

The following formulation was prepared:

| | |
|---|---|
| Mancozeb (85% w/w technical) | 705.88 g/l |
| TERSPERSE® 2510 | 40.00 |
| DS 10595 (Polyalkylene glycol-fatty acid condensate blend) | 50.00 |
| TERMUL® 3665 | 70.00 |
| TERIC® PE103 | 5.00 |
| Structuring blend from Example 34 comprising KRATON® G-1701 and SOLVESSO® 150 | 20.00 |
| HYDROSEAL® G250H | to Volume (1 litre) |

To an appropriately sized beaker, 359.12g/L of HYDROSEAL® G250H was added, followed by the required amounts of TERSPERSE® 2510, DS 10595, TERMUL® 3665 and TERIC® PE103. The mixture was then subject to moderate heating (approx. 30 - 40° C) for several minutes, then exposed to high shear mixing to form a homogeneous pre-dispersion. Once cooled to ambient temperature, the required amount of Mancozeb (85% w/w technical) was dispersed followed gradual addition of structuring blend from Example 34 comprising KRATON® G-1701 and SOLVESSO® 200. The resultant mixture was then subject to further high shear until satisfied that a homogeneous clump-free dispersion was achieved. Note in this instance that a polyalkylene glycolether fatty acid condensate blend known as DS 10595 was used as a secondary dispersant.

The formulation initially appears as a homogeneous yellow dispersion of intermediate viscosity. Upon dilution in 30° C in 342ppm hard water, the formulation yields a residue suspensibility of 88.1% after 30 minutes.

After storage for 14 days at 54° C, the formulation remained partly flowable and displayed 6.9% syneresis in addition to a slight increase in viscosity attributed to the presence of a weakly structured gel-matrix. Minor soft packing was also present that was easily reversible with minor stirring.

## Claims

1. A pre-mix composition for use in an agricultural oil-based suspension formulation, wherein the composition comprises an unsaturated rubber-type copolymer comprising at least styrene as a residue in oil and another olefin molecule selected from one or more of butadiene, ethylene, propylene, isoprene and butylenes, the composition further comprising a surfactant dispersant suitable for dispersing hydrophobic solid media in an oil, wherein the surfactant dispersant comprises at least one polyalkylene glycol-fatty acid condensate.

2. The pre-mix composition according to Claim 1, wherein the copolymer is selected from a styrene-butadiene copolymer, styrene-polyethylene/polypropylene or styrene-isoprene copolymer.

3. The pre-mix composition according to Claim 1, further comprising at least one C₈-C₂₀ organic acid or salt thereof.

4. The pre-mix composition according to Claim 3, wherein the organic acid salt comprises a salt of an alkyl group, wherein the alkyl group is a C₁₀-C₁₈ carbon chain, wherein the salt-forming anion is selected from a sulphate, sulphonate, phosphate or phosphonate ion; and wherein the salt-forming cation is selected from sodium, calcium, magnesium, potassium, aluminium, ammonium, alkylammonium, or alkanolammonium ions.

5. The pre-mix composition according to Claim 4, wherein the organic acid salt comprises sodium lauryl sulphate.

6. The pre-mix composition according to Claim 1, further comprising an organic acid salt selected from a salt of a fatty acid; a salt of a substituted or unsubstituted linear or branched alkyl or alkenyl group; and a salt of a substituted or unsubstituted aryl group.

7. The pre-mix composition according to Claim 6, wherein the fatty acid of the fatty acid salt is selected from oleic acid, stearic acid, myristic acid, palmitic acid, lauric acid and polyhydroxystearic acid and wherein the salt-forming cation is selected from sodium, calcium, magnesium, potassium, aluminium, ammonium, alkylammonium, or alkanolammonium ions.

8. The pre-mix composition according to Claim 7, wherein the fatty acid salt is selected from sodium oleate, potassium oleate, sodium stearate, calcium dioleate, calcium distearate and calcium polyhydroxystearic acid.

9. The pre-mix composition according to Claim 1, further comprising an organic acid salt comprising a salt of an alkenyl group comprising a C₁₂-C₁₆ carbon chain or an alkylaryl group comprising a C₁₀-C₁₆ carbon chain, and wherein the salt-forming anion of the organic acid is preferably selected from a sulphate, sulphonate, phosphate or phosphonate ion.

10. The pre-mix composition according to Claim 9, wherein the organic acid salt is linear alkylbenzene sulphonate.

11. The pre-mix composition according to any of the preceding claims, wherein molecular weight of the alkylene glycol moiety of the polyalkylene glycol-fatty acid condensate exceeds 1500amu.

12. An agricultural oil-based suspension formulation comprising the pre-mix composition according to any one of the claims 1 to 11, and comprising an active ingredient suspended in finely divided form in an oil.

13. A method of preparing a pre-mix composition according to Claim 1, wherein the rubber-type copolymer is heated in the oil until a clear fluid results.

14. A method of preparing an oil-based suspension formulation according to Claim 12 by using the pre-mix composition according to Claim 1.

15. The method according to Claim 14, further including the step of adding at least one emulsifying agent or surfactant dispersant to produce an OD formulation, and optionally wherein the active ingredient in the formulation is selected from Mancozeb, Diuron, Atrazine or Captan.

16. A method of preparing an oil dispersion (OD) formulation comprising an active ingredient comprising the steps of:
a) preparing a premix composition according to Claim 1 ;
b) dispersing the active ingredient in the premix composition without, or together with, further oil and optionally, further dispersant;
c) milling the active ingredient dispersion to achieve a particle size average in the range 1-12 microns;
d) optionally adding at least one further organic acid or salt thereof;
e) adding surfactant emulsifying agents; and
f) adjusting the final content of the active ingredient by adding further oil to achieve a continuous phase, and/or adding at least one polyalkylene glycol-fatty acid condensate,
wherein steps a) to e) are carried out in any order.

## Patentansprüche

1. Vorgemischte Zusammensetzung zur Verwendung in einer landwirtschaftlichen Suspensionsformulierung auf Ölbasis, wobei die Zusammensetzung ein ungesättigtes Copolymer vom Kautschuktyp, umfassend mindestens Styrol als einen Rest in Öl und ein anderes Olefinmolekül, ausgewählt aus einem oder mehreren von Butadien, Ethylen, Propylen, Isopren und Butylenen umfasst, wobei die Zusammensetzung ferner ein Tensiddispergiermittel umfasst, das zum Dispergieren von hydrophoben festen Medien in einem Öl geeignet ist, wobei das Tensiddispergiermittel mindestens ein Polyalkylenglycol-Fettsäure-Kondensat umfasst.

2. Vorgemischte Zusammensetzung nach Anspruch 1, wobei das Copolymer ausgewählt ist aus einem Styrol-Butadien-Copolymer, Styrol-Polyethylen/ Polypropylen- oder Styrol-Isopren-Copolymer.

3. Vorgemischte Zusammensetzung nach Anspruch 1, ferner umfassend mindestens eine organische C₈-C₂₀-Säure oder ein Salz davon.

4. Vorgemischte Zusammensetzung nach Anspruch 3, wobei das organische Säuresalz ein Salz einer Alkygruppe umfasst, wobei die Alkylgruppe eine C₁₀-C₁₈-Kohlenstoffkette ist, wobei das salzbildende Anion ausgewählt ist aus einem Sulfat-, Sulfonat-, Phosphat- oder Phosphonation; und wobei das salzbildende Kation ausgewählt ist aus Natrium-, Calcium-, Magnesium-, Kalium-, Aluminium-, Ammonium-, Alkylammonium- oder Alkanolammoniumionen.

5. Vorgemischte Zusammensetzung nach Anspruch 4, wobei das organische Säuresalz Natriumlaurylsulfat umfasst.

6. Vorgemischte Zusammensetzung nach Anspruch 1, ferner umfassend ein organisches Säuresalz, das ausgewählt ist aus einem Salz einer Fettsäure; einem Salz einer substituierten oder unsubstituierten, linearen oder verzweigten Alkyl- oder Alkenylgruppe; und einem Salz einer substituierten oder unsubstituierten Arylgruppe.

7. Vorgemischte Zusammensetzung nach Anspruch 6, wobei die Fettsäure des Fettsäuresalzes ausgewählt ist aus Ölsäure, Stearinsäure, Myristinsäure, Palmitinsäure, Laurinsäure und Polyhydroxystearinsäure und wobei das salzbildende Kation ausgewählt ist aus Natrium-, Calcium-, Magnesium-, Kalium-, Aluminium-, Ammonium-, Alkylammonium- oder Alkanolammoniumionen.

8. Vorgemischte Zusammensetzung nach Anspruch 7, wobei das Fettsäuresalz ausgewählt ist aus Natriumoleat, Kaliumoleat, Natriumstearat, Calciumdioleat, Calciumdistearat und Calciumpolyhydroxystearinsäure.

9. Vorgemischte Zusammensetzung nach Anspruch 1, ferner umfassend ein organisches Säuresalz, umfassend ein Salz einer Alkenylgruppe umfassend eine C₁₂-C₁₆-Kohlenstoffkette oder einer Alkylarylgruppe umfassend eine C₁₀-C₁₆-Kohlenstoffkette, und wobei das salzbildende Anion der organischen Säure bevorzugt ausgewählt ist aus einem Sulfat-, Sulfonat-, Phosphat- oder Phosphonation.

10. Vorgemischte Zusammensetzung nach Anspruch 9, wobei das organische Säuresalz lineares Alkylbenzolsulfonat ist.

11. Vorgemischte Zusammensetzung nach irgendeinem der vorhergehenden Ansprüche, wobei das Molekulargewicht der Alkylenglycol-Einheit des Polyalkylenglycol-Fettsäure-Kondensats 1500 amu übersteigt.

12. Landwirtschaftliche Suspensionsformulierung auf Ölbasis, umfassend die vorgemischte Zusammensetzung nach irgendeinem der Ansprüche 1 bis 11 und umfassend einen Wirkstoff, der in feinverteilter Form in einem Öl suspendiert ist.

13. Verfahren zur Herstellung einer vorgemischten Zusammensetzung nach Anspruch 1, wobei das Copolymer vom Kautschuktyp in dem Öl erwärmt wird, bis sich eine klare Flüssigkeit ergibt.

14. Verfahren zur Herstellung einer Suspensionsformulierung auf Ölbasis nach Anspruch 12 unter Verwendung der vorgemischten Zusammensetzung nach Anspruch 1.

15. Verfahren nach Anspruch 14, ferner umfassend den Schritt der Zugabe von mindestens einem Emulgator oder Tensiddispergiermittel zur Herstellung einer OD-Formulierung, und wobei gegebenenfalls der Wirkstoff in der Formulierung ausgewählt ist aus Mancozeb, Diuron, Atrazin oder Captan.

16. Verfahren zur Herstellung einer Öldispersions (OD)-Formulierung, umfassend einen Wirkstoff, umfassend die Schritte:
a) Herstellen einer vorgemischten Zusammensetzung nach Anspruch 1;
b) Dispergieren des Wirkstoffs in der vorgemischten Zusammensetzung ohne oder zusammen mit weiterem Öl und gegebenenfalls weiterem Dispergiermittel;
c) Mahlen der Wirkstoffdispersion, um eine mittlere Teilchengröße im Bereich von 1-12 Mikron zu erzielen;
d) gegebenenfalls Zugabe mindestens einer weiteren organischen Säure oder eines Salzes davon;
e) Zugabe von Tensidemulgatoren; und
f) Einstellen des Endgehalts des Wirkstoffs durch Zugabe von weiterem Öl zur Erzielung einer kontinuierlichen Phase, und/oder Zugabe mindestens eines Polyalkylenglycol-Fettsäure-Kondensats,
wobei die Schritte a) bis e) in beliebiger Reihenfolge durchgeführt werden.

## Revendications

1. Composition de prémélange pour utilisation dans une formulation de suspension à base d'huile à visée agricole, où la composition comprend un copolymère de type caoutchouc insaturé comprenant au moins du styrène sous forme de résidu dans l'huile et une autre molécule d'oléfine choisie parmi un ou plusieurs du butadiène, de l'éthylène, du propylène, de l'isoprène et des butylènes, la composition comprenant en outre un dispersant tensioactif apte à disperser des milieux solides hydrophobes dans une huile, où le dispersant tensioactif comprend au moins un condensat de polyalkylèneglycol-acide gras.

2. Composition de prémélange selon la revendication 1, dans laquelle le copolymère est choisi parmi un copolymère styrène-butadiène, un copolymère styrène-polyéthylène/polypropylène ou styrène-isoprène.

3. Composition de prémélange selon la revendication 1, comprenant en outre au moins un acide organique en C₈-C₂₀ ou sel de celui-ci.

4. Composition de prémélange selon la revendication 3, dans laquelle le sel d'acide organique comprend un sel d'un groupe alkyle, où le groupe alkyle est une chaîne carbonée en C₁₀-C₁₈, où l'anion formant sel est choisi parmi un ion sulfate, sulfonate, phosphate ou phosphonate ; et le cation formant sel est choisi parmi les ions sodium, calcium, magnésium, potassium, aluminium, ammonium, alkylammonium ou alcanolammonium.

5. Composition de prémélange selon la revendication 4, dans laquelle le sel d'acide organique comprend le laurylsulfate de sodium.

6. Composition de prémélange selon la revendication 1, comprenant en outre un sel d'acide organique choisi parmi un sel d'acide gras ; un sel d'un groupe alkyle ou alcényle linéaire ou ramifié, substitué ou non substitué ; et un sel d'un groupe aryle substitué ou non substitué.

7. Composition de prémélange selon la revendication 6, dans laquelle l'acide gras ou le sel d'acide gras est choisi parmi l'acide oléigue, l'acide stéarique, l'acide myristique, l'acide palmitique, l'acide laurigue et l'acide polyhydroxystéarique et dans laquelle le cation formant sel est choisi parmi les ions sodium, calcium, magnésium, potassium, aluminium, ammonium, alkylammonium ou alcanolammonium.

8. Composition de prémélange selon la revendication 7, dans laquelle le sel d'acide gras est choisi parmi l'oléate de sodium, l'oléate de potassium, le stéarate de sodium, le dioléate de calcium, le distéarate de calcium et l'acide polyhydroxystéarique de calcium.

9. Composition de prémélange selon la revendication 1, comprenant en outre un sel d'acide organique comprenant un sel d'un groupe alcényle comprenant une chaîne carbonée en C₁₂-C₁₆ ou d'un groupe alkylaryle comprenant une chaîne carbonée en C₁₀-C₁₆, et où l'anion formant sel de l'acide organique est de préférence choisi parmi un ion sulfate, sulfonate, phosphate ou phosphonate.

10. Composition de prémélange selon la revendication 9, dans laquelle le sel d'acide organique est un sulfonate d'alkylbenzène linéaire.

11. Composition de prémélange selon l'une quelconque des revendications précédentes, dans laquelle le poids moléculaire du groupement alkylèneglycol du condensat polyalkylèneglycol-acide gras est supérieur à 1500 amu.

12. Formulation de suspension à base d'huile à visée agricole comprenant la composition de prémélange selon l'une quelconque des revendications 1 à 11, et comprenant un principe actif en suspension sous forme finement divisée dans une huile.

13. Procédé de préparation d'une composition de prémélange selon la revendication 1, dans lequel le copolymère de type caoutchouc est chauffé dans l'huile jusqu'à obtention d'un fluide clair.

14. Procédé de préparation d'une formulation de suspension à base d'huile selon la revendication 12 par utilisation de la composition de prémélange selon la revendication 1.

15. Procédé selon la revendication 14, comprenant en outre l'étape consistant à ajouter au moins un agent émulsifiant ou un dispersant tensioactif pour obtenir une formulation OD, et éventuellement dans lequel le principe actif dans la formulation est choisi parmi le mancozeb, le diuron, l'atrazine ou le captan.

16. Procédé de préparation d'une formulation de dispersion dans l'huile (OD) contenant un principe actif comprenant les étapes consistant à :
a) préparer une composition de prémélange selon la revendication 1 ;
b) disperser le principe actif dans la composition de prémélange sans, ou avec, une quantité supplémentaire d'huile et éventuellement de dispersant ;
c) broyer la dispersion de principe actif pour obtenir une taille de particule moyenne dans la plage de 1 à 12 microns ;
d) ajouter éventuellement au moins un autre acide organique ou sel de celui-ci ;
e) ajouter les agents émulsifiants tensioactifs ; et
f) ajuster la teneur finale en principe actif par ajout d'une quantité supplémentaire d'huile pour obtenir une phase continue, et/ou ajout d'au moins un condensat de polyalkylèneglycol-acide gras,
dans lequel les étapes a) à e) sont mises en oeuvre dans un ordre quelconque.
